# EUROPEAN PATENT APPLICATION

(11) **EP 4 712 279 A1**
(43) Date of publication of application: **18.03.2026**
(21) Application number: 24200241.8
(22) Date of filing: 13.09.2024
(51) Int. Cl.: H02B 1/56, H02B 13/025

(54) **SWITCHGEAR WITH AIR DUCT**

(71) Applicant: ABB SCHWEIZ AG, 5400 Baden (CH)
(72) Inventor: SKUCI, Michal, 602 00 Brno (CZ); KALAB, Ctibor, 628 00 Brno (CZ)
(74) Representative: Maiwald GmbH

(57) **Abstract**

The present invention relates to a switchgear (10) comprising a housing (14) in which switchgear components are arranged and an air duct (18) which is arranged on the housing (14) for ventilation and discharging arc gas of an internal arc event. The air duct (18) comprising at least one first opening (22), which fluidly connects an internal of the switchgear housing (14) with the air duct (18) and a second opening (26) for discharging the arc gas from the air duct (18) to an outer environment of a building. The air duct (18) comprises at least one ventilation opening (34) for cooling the internal of the housing (14) during normal operation. Between the first opening (22) and the ventilation opening (34) at least one pressure movable element (38) is arranged, which is movable due to the pressure of the arc gas from a normal operation position, in which the first opening (22) is connected with the ventilation opening (34), to a fault position, in which position a connection between the ventilation opening (34) and the first opening (22) is blocked by the movable element (38). The air duct (18) comprises a cover (30) provided on the second opening (36) blocking air flow during normal operation of the switchgear (10) and opens due to the pressure of the arc gas.

## Description

### FIELD OF THE INVENTION

The present invention relates to a switchgear with an air duct for ventilation and discharging arc gas of an internal arc event.

### BACKGROUND OF THE INVENTION

When an arc fault or an internal short-circuit fault occurs in a switchgear, high-temperature high-pressure gas is generated inside the switchgear. Such high-temperature high-pressure gas is required to be prevented from leaking to the surroundings of the switchgear. Therefore, in general, a housing of the switchgear is configured to have sufficient airtightness and rigidity and also is provided with a pressure release structure like an air duct for discharging the high-temperature high-pressure gas to outside to release the pressure. The high-temperature high-pressure gas usually is discharged to the outer side of a building where the switchgear is arranged.

Prior art US 2020/0412108 A1 describes a switchgear design aimed at ensuring high airtightness for discharge paths of high-temperature high-pressure gas generated during arc faults or internal short-circuit faults. It addresses the limitations of existing technologies, particularly the issues related to strength reduction and potential gas leakage at connection points between ducts. The document emphasizes the need for reliable airtight connections, which are often compromised in traditional bolt connections. It further outlines specific structural improvements to enhance the overall safety and reliability of electrical equipment.

### SUMMARY OF THE INVENTION

The problem to be solved by the present invention is to provide a switchgear capable of discharging arc gas, having a high energy efficiency.

The problem is solved by a switchgear having the features of claim 1. Preferred embodiments of the invention are specified in the dependent claims.

According to the invention a switchgear is proposed comprising a housing in which switchgear components are arranged and an air duct which is arranged on the housing for ventilation and discharging arc gas of an internal arc event. The air duct comprising at least one first opening, which fluidly connects the internal of the housing with the air duct and a second opening for discharging the arc gas from the air duct to an outer environment of a building. The air duct comprises at least one ventilation opening for cooling the switchgear during normal operation. Between the first opening and the ventilation opening at least one pressure movable element is arranged, which is movable due to the pressure of the arc gas from a normal operation position, in which the first opening is connected with the ventilation opening, to a fault position, in which position a connection between the ventilation opening and the first opening is blocked by the movable element. The air duct comprises a cover provided on the second opening blocking air flow during normal operation of the switchgear and opens due to the pressure of the arc gas.

A pressure movable element has to be understood as a structural element which is capable of changing the position dependent on the pressure in the air duct. In the present case the pressure movable element is movable between two positions, i.e. the normal operation position and the fault position. In the normal operation the hot air of the switchgear will be ventilated through the ventilation openings into the building. During the normal operation the second opening is closed by the cover, so that especially during wintertime the building is not cooled down and increases heating costs. However, to establish a high safety for the staff in the building, during a fault condition the ventilation openings automatically closes due to the high pressure and the second opening, connected to the outer environment of the building, opens to discharge the arc gas to an outside of the building. With such a switchgear it is possible providing a high energy efficiency and also establishing a high security for the staff and the building.

In a preferred embodiment of the invention, the pressure movable element is a flap, which is arranged in the air duct. The flap has the advantage that this is an easy structural part. Further, the flap has a specific surface area onto which the pressure of the arc gas can act on, so that the flap is movable dependent on the pressure. Accordingly, by using such a flap no sophisticated sensor arrangement detecting the pressure of the arc gas is necessary. By providing the flap inside air duct the flap in case of an overpressure can be pressed to a duct wall, only, so that the ventilation opening in the duct wall easy can be closed by the flap.

In a further preferred embodiment, the flap comprises flap openings arranged in the flap, allowing an air flow through the flap to the ventilation opening. By providing an opening in the flap the flap can be arranged such that the airflow mainly acts on the flap and not flow past the flap. By directing the airflow on the flap, it can be secured that the flap in an internal arc event closes due to the pressure of the arc gas acting on the flap. Unintentional escape of arc gas through the ventilation opening thereby can be prevented so that the safety of the staff and the building is guaranteed.

Advantageously, an air blocking structure is arranged around the flap, so that the first opening only is fluidly connected to the ventilation opening via the flap openings. The air blocking structure is a structural element of the air duct preventing the air flowing into a side region of the flap. With this air blocking structure, it can be prevented that turbulences are generated hindering the flap of being pushed upwards and closing the ventilation opening. With this blocking structure a closing of the flap is ensured. The safety of the switchgear is improved.

Preferably, the flap openings are designed as ventilation grilles. A flap opening which is designed as ventilation grilles has the advantage that a flow resistance is provided by this ventilation grilles. Accordingly, in an internal arc event the arc gas cannot be freely discharged to the ventilation opening. The arc gas rather exerts a pushing force to the flap, respectively to the ventilation grilles, so that the flap is pushed to an upper side of the air duct and the ventilation openings are blocked by the flap. Accordingly, it can be prevented that the arc gas is discharged from the air duct via the ventilation openings. The safety of the building and the staff thereby can be guaranteed.

In a further advantageous development, the flap openings are arranged offset to the ventilation opening, so that an air flow between the flap openings and the ventilation opening in the fault position of the flap is blocked. The flap openings and the ventilation openings are arranged such that in a closed position of the flap both openings do not overlap with each other. In a closing position therefore, no airflow is possible between the flap openings and the ventilation openings. With such a configuration it is easy to open and close a connection between the flap openings and the ventilation openings, merely by changing the position of the flap.

In a preferred embodiment, a locking device is provided, locking the pressure movable element in a fault position. The locking device prevents the flap returning to the operation position. Thereby it can be prevented that remaining arc gas after the internal arc event having a lower pressure escape from the switchgear. As the switchgear after an internal arc event usually has to be repaired, also the flap has to be manually opened. The safety of the switchgear therefore can be improved.

A preferred embodiment specifies that the cover is designed as a flap, arranged on an outer side of the air duct. Designing the cover as a flap has the advantage that the flap is an unsophisticated structural element which easy can be manufactured. The manufacturing costs of such as switchgear therefore can be decreased.

Preferably, the flap on the outer side, is hinged on an upper side of the air duct. By means of such a hinge configuration it is guaranteed that the cover automatically closes after the arc gas is discharged to an outer side of the building. Therefore, it is also prevented that after an internal arc event cold air enters the air duct and cools the building. The energy efficiency of the building therefore can be improved.

The above aspects and examples will become apparent from and be elucidated with reference to the embodiments described hereinafter.

### BRIEF DESCRIPTION OF THE DRAWINGS

The subject matter of the Invention will be explained in more details in the following description illustrated in the drawings, in which:
- Figure 1: Switchgear according to an embodiment of the present invention,
- Figure 2: Air duct during normal operation of the switchgear,
- Figure 3: Air duct during an internal arc event of the switchgear,
- Figure 4: Detailed view of the ventilation openings and pressure movable elements, and
- Figure 5: Side view of the flap in a closed and an opened position.

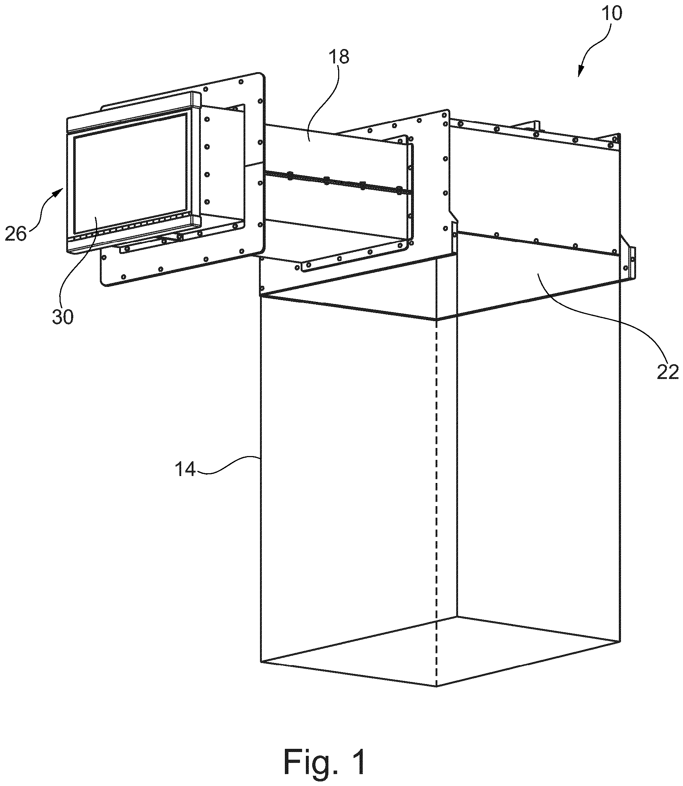

Figure 1 shows a switchgear 10 according to an embodiment of the present invention. The switchgear 10 comprises a housing 14 in which switchgear components (not shown) are provided. On an upper side of the housing 14 an air duct 18 is provided for the ventilation of heat and for discharging an arc gas of an internal arc event. The air duct 18 comprises a first opening 22 on the lower side thereof, which opens to the housing 14. On an end of the air duct 18 a second opening 26 is provided for discharging the arc gas of an internal arc event. In the shown figure the second opening 26 is closed by a cover 30 which is designed as a flap.

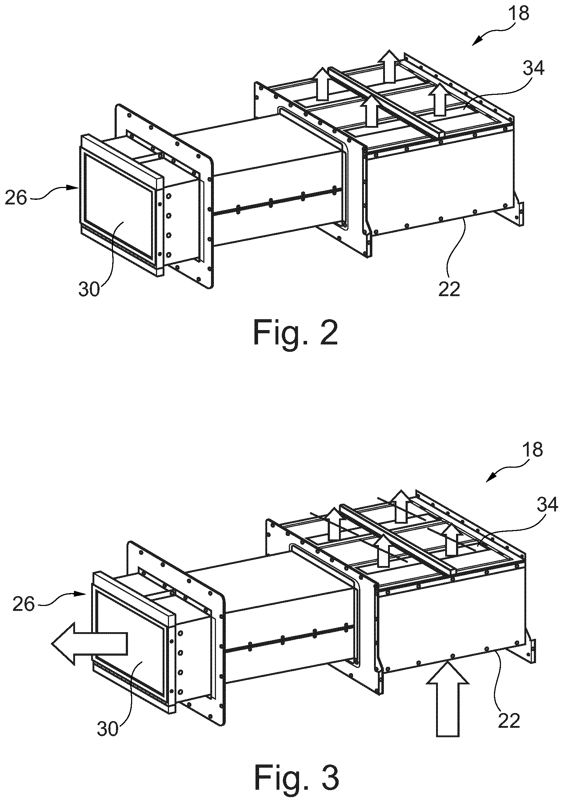

Figure 2 shows a top view of the air duct 18 during a normal operation. On the top of the air duct 18, ventilation openings 34 are provided, so that the housing 14 is ventilated. Via these ventilation openings 34 heat generated in the housing 14 of the switchgear 10 can be discharged to the outside of the switchgear 10. The ventilation openings 34 thereby discharge the heat to an inside of the building in which the switchgear 10 is arranged. Figure 3 thereto shows the air duct 18 during an internal arc event of the switchgear 10. During this arc event the arc gas enters the air duct 18 through the first opening 22. In contrast to the normal operation the ventilation openings 34 are closed, so that the arc gas is not discharged by the ventilation openings 34. Due to the high pressure of the arc gas the cover 30 at the second opening 26 is opened so that the arc gas is discharged by the second opening 26. The second opening 26 thereby discharges the arc gas to an outer environment of the building in which the switchgear 10 is arranged.

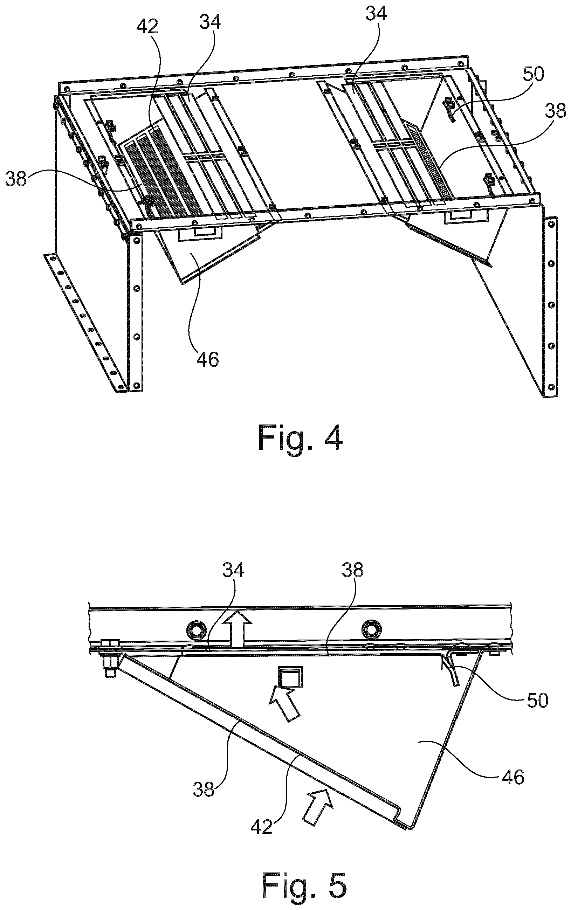

Figure 4 shows a detailed view of the ventilation openings 34 and pressure movable elements 38 during normal operation. In this embodiment the pressure movable elements 38 are designed as flaps. The flaps 38 comprise flap openings 42 which are designed as ventilation grilles. Also, the ventilation openings 34 are designed as ventilation grilles. The flap openings 42 are provided offset to the ventilation openings 34. Accordingly, in a closed position of the flaps 38, the ventilation openings 34 and the flap openings 42 do not overlap with each other. Figure 4 further shows air blocking structures 46, which are provided around the flaps 38 so that air in a side region of the flap 38 is blocked from entering to the ventilation opening 34. The air therefore is forced entering the flap openings 42 first before being discharged through the ventilation openings 34.

In an internal arc event, the pressure of the arc gas moves the flaps 38 to an upper side of the air duct 18 so that an airflow between the flap openings 42 and the ventilation openings 34 is blocked. On an upper side of the air duct 18, locking devices 50 are arranged, which locks the flap 38 in the upper position. In this embodiment the locking devices 50 are provided as latch pieces, which interact with the flap 38 so that the flap 38 is fixed in the upper position by the latch pieces 50. Figure 5 shows a side view of the flap 38 in a closed and an opened position. In an opened position the air freely flows between the flap openings 42 and the ventilation openings 34. In the closed position the flap 38 lies against an upper portion of the air duct 18 and is fixed in this position by the latch piece 50. In this position the airflow between the flap openings 42 and the ventilation openings 34 is blocked.

### List of reference numbers

- 10: switchgear
- 14: housing
- 18: air duct
- 22: first opening
- 26: second opening
- 30: cover
- 34: ventilation opening
- 38: pressure movable elements/flaps
- 42: flap opening
- 46: air blocking structure
- 50: locking device/latch piece

## Claims

1. Switchgear (10) comprising a housing (14) in which switchgear components are arranged and an air duct (18) which is arranged on the housing (14) for ventilation and discharging arc gas of an internal arc event, wherein the air duct (18) comprising at least one first opening (22), which fluidly connects an internal of the switchgear housing (14) with the air duct (18) and a second opening (26) for discharging the arc gas from the air duct (18) to an outer environment of a building,
**characterized in that,**
the air duct (18) comprises at least one ventilation opening (34) for cooling the internal of the housing (14) during normal operation, wherein between the first opening (22) and the ventilation opening (34) at least one pressure movable element (38) is arranged, which is movable due to the pressure of the arc gas from a normal operation position, in which the first opening (22) is connected with the ventilation opening (34), to a fault position, in which position a connection between the ventilation opening (34) and the first opening (22) is blocked by the movable element (38), wherein the air duct (18) comprises a cover (30) provided on the second opening (36) blocking air flow during normal operation of the switchgear (10) and opens due to the pressure of the arc gas.

2. Switchgear (10) according to claim 1, **characterized in that** the pressure movable element (38) is a flap, which is arranged in the air duct (18).

3. Switchgear (10) according to claim 2, **characterized in that** the flap (38) comprises flap openings (42) arranged in the flap (38), allowing an air flow through the flap (38) to the ventilation opening (34).

4. Switchgear (10) according to claim 3, **characterized in that** an air blocking structure (46) is arranged around the flap (38), so that the first opening (22) only is fluidly connected to the ventilation opening (34) via the flap openings (42).

5. Switchgear (10) according to claim 4, **characterized in that** the flap openings (42) are designed as ventilation grilles.

6. Switchgear (10) according to one of the claims 3 to 5, **characterized in that** the flap openings (42) are arranged offset to the ventilation opening (34), so that an air flow between the flap openings (42) and the ventilation opening (34) in the fault position of the flap (38) is blocked.

7. Switchgear (10) according to one of the preceding claims, **characterized in that** a locking device (50) is provided, locking the pressure movable element (38) in a fault position.

8. Switchgear (10) according to one of the preceding claims, **characterized in that** the cover (30) is designed as a flap, arranged on an outer side of the air duct (18).

9. Switchgear (10) according to claim 8, **characterized in that** the flap (30) on the outer side, is hinged on an upper side of the air duct (18).
